Europäisches Patentamt

European Patent Office

Office européen des brevets

(11) Veröffentlichungsnummer: **0 391 837**
**A2**

(12) **EUROPÄISCHE PATENTANMELDUNG**

(21) Anmeldenummer: 90730006.5

(51) Int. Cl.5: **B65G 61/00**

(22) Anmeldetag: 06.04.90

(30) Priorität: 07.04.89 DE 3911883

(43) Veröffentlichungstag der Anmeldung:
**10.10.90 Patentblatt 90/41**

(84) Benannte Vertragsstaaten:
**BE DE DK FR GB IT NL**

(71) Anmelder: RO-BER, INDUSTRIE- ROBOTER
GMBH
Voltastrasse 5
D-1000 Berlin 65(DE)

(72) Erfinder: **Hetterhoff, Robert, Dipl.-Ing. (FH)**
**Gontermannstrasse 12**
**D-1000 Berlin 42(DE)**
Erfinder: **Schlimm, Norbert, Dipl.-Ing.**
**Am Kleinen Wannsee 20d**
**D-1000 Berlin 39(DE)**

(74) Vertreter: **Eikenberg & Brümmerstedt**
**Patentanwälte**
**Schackstrasse 1**
**D-3000 Hannover 1(DE)**

(54) **Vorrichtung zum Palettieren von Behältern.**

(57) Es wird eine Vorrichtung zum Palettieren von stapelfähigen, tragbaren Behältern (2), insbesondere von Farbgebinden unter Verwendung eines Industrie-Roboters (12) aufgezeigt, die raumsparend ist und eine rasche Umstellung auf verschiedene Behältergrößen und ggfs. Behälterformen ermöglicht. In der Zuführungsbahn (1) ist eine auf Behälter (2) unterschiedlicher Größe einstellbare Positionierungsvorrichtung (4) für die einzeln zugeführten Behälter einer jeweils gleichen Größe vorgesehen, wobei am Ende der Zuführungsbahn (1) eine Abführ- und Stapelvorrichtung (9; 22, 26, 27; 10) zur Bildung eines Stapels aus einer vorgegebenen Zahl von Behältern (2) vorgesehen ist, und wobei der Industrie-Roboter (12) zum Aufnehmen der Stapel zu ihrem Umsetzen auf eine Palette (16) einen Greiferarm (13) aufweist, der für die Handhabung von unterschiedlichen Behältergrößen der Stapel einstellbar ist.

FIG. 7

EP 0 391 837 A2

Die Erfindung betrifft eine Vorrichtung zum Palettieren von stapelfähigen, tragbaren Behältern, insbesondere von Farbgebinden, unter Verwendung eines Industrie-Roboters.

Es ist bekannt, Packstücke, die beispielsweise in oder am Ende einer Fertigungsstraße anfallen, mittels automatischer Vorrichtungen auf Paletten umzusetzen und darauf zu stapeln. In den meisten Fällen handelt es sich dabei um Anlagen, mit denen Packstücke stets gleicher Abmessung palettiert werden. Dabei werden die Packstücke entweder einzeln oder in einer parallelen Gruppe erfaßt und auf der Palette gestapelt. Mit solchen Palettierautomaten lassen sich hohe Palettierleistungen von mehreren 1000 Packstücken pro Stunde erzielen, jedoch erfordern diese Automaten in der Regel einen großen Raumbedarf, und sie haben den Nachteil einer geringen Flexibilität, d.h. bei Einsatz für ein Packstück mit anderen Abmessungen sind sie entweder gar nicht oder zumindest nur mit großem Aufwand auf die anderen Packstückabmessungen umzurüsten.

Eine solche Flexibilität wird jedoch oft gefordert. Beispielsweise in der Farben- und Lebensmittelproduktion werden Eimer mit unterschiedlichem Volumen und damit auch unterschiedlicher Größe verwendet, wobei die Fertigung eines Produkts relativ häufig die Umstellung auf verschiedene Behältergrößen erfordert. Beispielsweise werden bei der Produktion von Farben nahezu zehn unterschiedliche Standard-Eimergrößen verwendet.

Im Gegensatz zu den Palettierautomaten haben Industrie-Roboter den Vorzug hoher Flexibilität, jedoch liegt die Leistungsgrenze eines Industrie-Roboters bei wenigen 100 Bewegungsabläufen pro Stunde. Dies bedeutet, da pro Bewegungsablauf nur ein Packstück gegriffen und übersetzt werden kann, daß sich die Palettierleistung im allgemeinen bei einigen 100 Packstücken pro Stunde erschöpft.

Der Erfindung liegt die Aufgabe zugrunde, eine Palettiervorrichtung der eingangs genannten Art zu schaffen, die sich durch hohe Flexibilität auszeichnet und trotzdem eine hohe Palettierleistung besitzt, und die einen geringen Raumbedarf erfordert.

Die gestellte Aufgabe wird gemäß der Erfindung dadurch gelöst, daß in der Zuführungsbahn eine auf Behälter unterschiedlicher Größe einstellbare Positionierungsvorrichtung für die einzeln zugeführten Behälter einer jeweils gleichen Größe vorgesehen ist, daß am Ende der Zuführungsbahn eine Abführ- und Stapelvorrichtung zur Bildung eines Stapels von einer vorgegebenen Zahl von Behältern vorgesehen ist, und daß der Industrie-Roboter zum Aufnehmen der Stapel und zu ihrem Umsetzen auf eine Palette einen Greiferarm aufweist, der für die Handhabung unterschiedlicher Behältergrößen der Stapel einstellbar ist.

Die Erfindung nutzt die Flexibilität des Industrie-Roboters aus, ermöglicht aber trotzdem eine hohe Palettierleistung, weil die in schnellem Takt ankommenden Behälter dadurch verarbeitet werden können, daß sie vor dem Umsetzen auf die Palette gestapelt werden und dadurch pro Bewegungsablauf des Roboters immer eine Vielzahl von Behältern erfaßt werden kann.

Die Stapelvorrichtung besteht dabei vorzugsweise aus einem in Stufen einer wählbaren Behälterhöhe absenkbaren Aufnahmevorrichtung, so daß von jeder jeweils angelieferten Serie von Behältern einer vorgegebenen Größe Stapel gebildet werden können, wobei die Menge der Behalter pro Stapel bei kleineren Behältern größer sein kann als bei Behältern mit größeren Abmessungen.

In Ausgestaltung der Erfindung dient als Industrie-Roboter ein Knickarm-Roboter, dessen Greifarm um seine Längsachse drehbar ausgebildet ist und auf seinem Umfang mehrere Gruppen von jeweils übereinander angeordneten Aufnahmehaken aufweist, wobei die Aufnahmehaken in jeder Gruppe den gleichen Abstand voneinander, aber einen von Gruppe zu Gruppe unterschiedlichen Abstand aufweisen, und wobei wahlweise eine Gruppe in die Arbeitslage einstellbar ist. Auf diese Weise kann der Roboter jeweils schnell auf Stapel mit Behältern unterschiedlicher Abmessungen umgestellt werden.

Für die Erfassung von Farbgebinden sind die Aufnahmehaken vorzugsweise so ausgebildet und mit einem solchen Abstand voneinander in den Gruppen versehen, daß sie unter die zur Aufnahme des Behälterdeckels dienende Wulst oder die Henkelösen aller Behälter eines Stapels greifen können.

Bei einer bevorzugten Ausführungsform der Erfindung besteht die Abführvorrichtung aus einer hinter der Zuführungsbahn oberhalb der Aufnahmevorrichtung für die Behälterstapel in der Ebene der Zuführungsbahn in eine eine Verlängerung der Zuführungsbahn bildende Position und aus dieser Position heraus verschiebbaren Platte und aus in Transportrichtung der Behälter hin-und herbewegbaren, quer in den Transportweg der Behälter einfahrbaren Schiebern, wobei die Steuerung für die Platte und die Schieber so ausgebildet ist, daß jeweils ein einzelner Behälter durch die Schieber auf die zur Zuführungsbahn eingefahrene Platte und durch anschließendes Herausfahren der Platte auf die Aufnahmevor richtung bzw. auf dort bereits abgesetzte Behälter gelangt. Eine solche Vorrichtung ist besonders dann zweckmäßig, wenn durch vorhergehende Arbeitsgänge die Behälter bereits in einer zentrierten Lage auf die Zuführungsbahn gelangen, und es können dann praktisch Behälter aller Größen ohne große Umstellungsmaßnahmen palettiert werden.

Im Bedarfsfall kann aber auch die Positionierungsvorrichtung als Zentriervorrichtung ausgebildet sein und aus beidseitig der Zuführungsbahn angeordneten Anschlaggruppen bestehen, wobei die Anschlaggruppen entsprechend der Breite der zu palettierenden Behälter relativ aufeinander zu bewegbar sind und wahlweise jeweils ein Paar einander gegenüberliegender Anschläge derart aktivierbar ist, daß sie im Weg der Griffhalterungen des jeweils ankommenden Behälters liegen, und wobei die Abführvorrichtung aus einem Greiferpaar besteht, mit dem der auf die Anschläge aufgelaufene Behälter erfaßbar und auf die Aufnahmevorrichtung für die Stapelung bzw. auf darauf bereits abgesetzte Behälter aufsetzbar ist.

Die Vorrichtung hat dabei zweckmäßigerweise einen Wahlschalter, der auf die jeweils zu palettierende Behältergröße einstellbar ist, und durch den automatisch die Einstellung und Aktivierung der Positionierungsvorrichtung, der Abführvorrichtung, der Hub und die Hubzahl der absenkbaren Aufnahmevorrichtung und die Einstellung der Aufnahmehaken-Gruppe des Roboters vorwählbar ist.

Hierdurch ist auf einfache Weise eine Umstellung auf die Palettierung von Behältern mit unterschiedlicher Größe möglich, wobei entweder noch durch den Wahlschalter oder durch gesonderte Einstellmittel gleich das Palettierschema für die jeweilige Behältergröße vorgegeben werden kann.

Die Erfindung wird nachfolgend anhand von in der Zeichnung dargestellten Ausführungsbeispielen näher erläutert. In der Zeichnung zeigen:

Fig. 1 in perspektivischer Darstellung die Zentriervorrichtung einer Ausführungsform der Erfindung,

Fig. 2 eine Draufsicht auf die Zentriervorrichtung mit einer zugeordneten Greifvorrichtung,

Fig. 3 eine Draufsicht auf die Greifvorrichtung mit der dieser nachgeschalteten Stapelvorrichtung,

Fig. 4 eine Seitenansicht der Stapelvorrichtung mit dem Roboter zur Abführung des Stapels,

Fig. 5 eine Seitenansicht des Betätigungsarms des Roboters beim Aufsetzen des Stapels auf eine Palette,

Fig. 6 eine Seitenansicht des Betätigungsarms des Roboters und

Fig. 7 eine weitere bevorzugte Ausführungsform der Erfindung, bei der die Positionierungsvorrichtung sowie die Abführ- und Stapelvorrichtung gegenüber dem Ausführungsbeispiel gemäß Fig. 1 bis 3 abgewandelt ausgebildet ist.

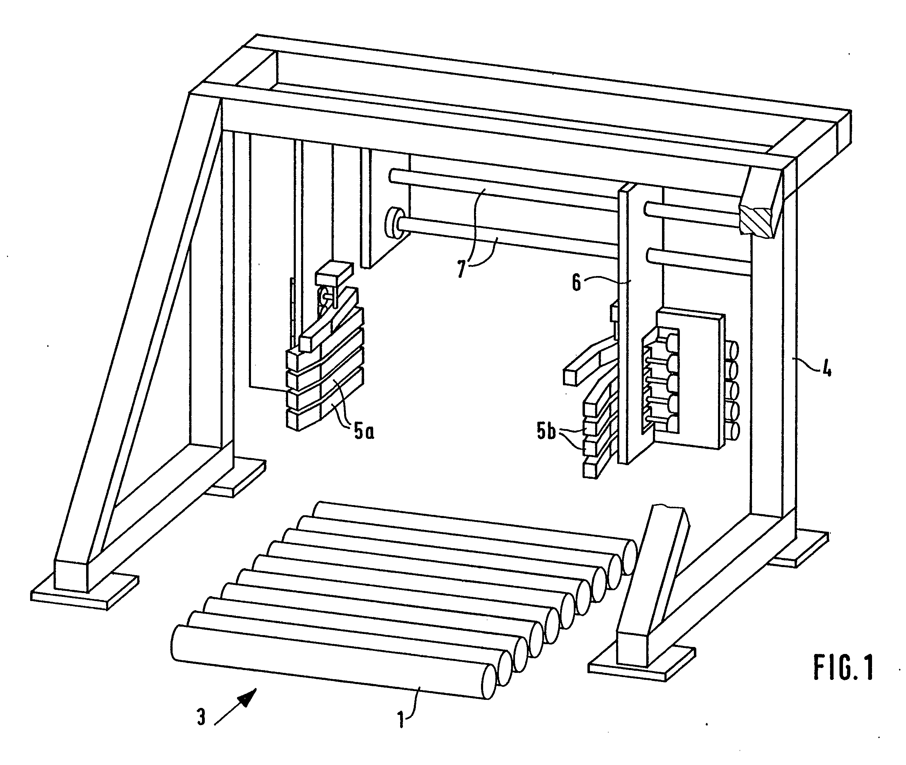

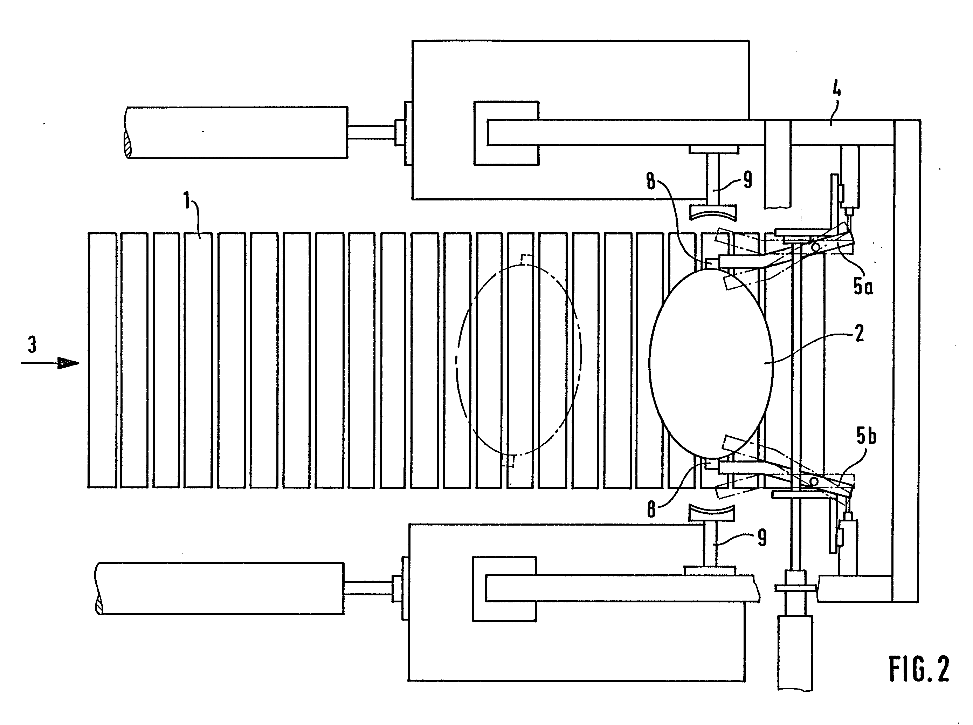

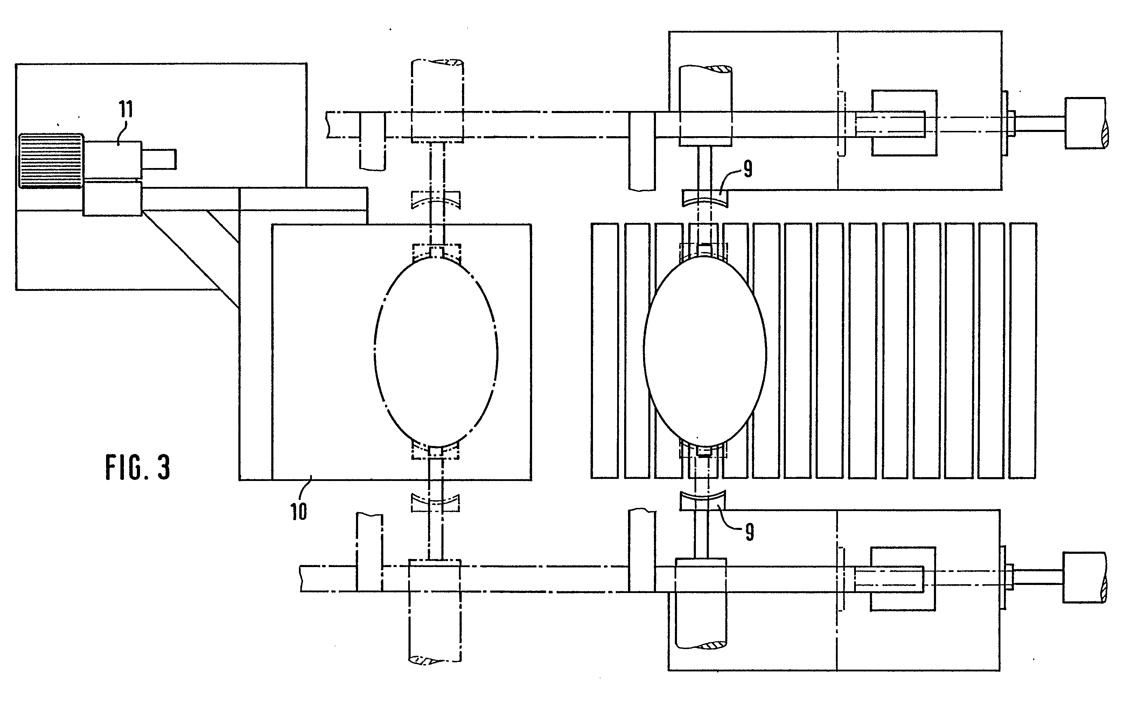

Fig. 1 und 2 zeigen eine Zuführungsbahn 1 in Form von Rollen, die am Ende der Fertigungsstraße, z.B. einer Farbenproduktionsanlage angeordnet ist, und auf der Farbgebinde 2 in Form von mit einem Deckel verschlossenen Behältern in Richtung des Pfeiles 3 in kurzem Taktabstand ankommen. Die Eimer laufen in eine portalartige Positionierungsvorrichtung 4, die hier als Zentriervorrichtung ausgebildet ist und auf beiden Seiten der Zuführungsbahn 1 je eine Gruppe von Anschlägen 5a bzw. 5b aufweist. In den Gruppen sind die Anschläge übereinander angeordnet, und die Gruppe 5a ist ortsfest an der Zentriervorrichtung angebracht, während die Gruppe 5b sich an einer Halterung 6 befindet, die auf Stangen 7 verschiebbar ist, so daß der Abstand zwischen den Anschlaggruppen 5a und 5b je nach Größe der jeweils angelieferten Behälter eingestellt werden kann. Die Anschläge 5 sind schwenkbar ausgebildet, und es kann jeweils ein Paar von gegenüberliegenden Anschlägen aktiviert werden, das sich in der Höhe befindet, in der die Griffhalterungen 8 am oberen Ende der jeweils zugeführten Behälter liegen. Bei der Aktivierung schwenken die beiden betroffenen Anschläge mit ihrem vorderen Ende einwärts, so daß die Griffhalterungen 8 eines ankommenden Eimers 2 auf die einwärts geschwenkten Enden des aktivierten Anschlagpaares auflaufen. Die Aktivierung erfolgt vorzugsweise elektromagnetisch. Der Schwenkwinkel der Anschlagpaare kann unterschiedlich groß sein, was in Fig. 2 angedeutet ist, und er ist vorzugsweise auch einstellbar. Beim Auflaufen der Griffhalterungen 8 auf die Enden der Anschläge 5 werden die Eimer 2 automatisch zentriert, so daß sie in der zentrierten Lage von den Greifarmen 9 einer Abführvorrichtung erfaßt und gemäß Fig. 3 auf eine Auflage 10 umgesetzt werden können. Die Auflage 10 ist durch einen Motor 11 in der Höhe verstellbar, wobei immer dann, wenn ein Behälter auf die Auflage aufgesetzt worden ist, eine Absenkung der Auflage um etwa die Höhe des Behälters vorgenommen wird, so daß der nachfolgende Behälter auf den abgesenkten Behälter aufgesetzt werden kann. Auf diese Weise wird ein Stapel mit einer vorgegebenen Zahl von Behältern gebildet.

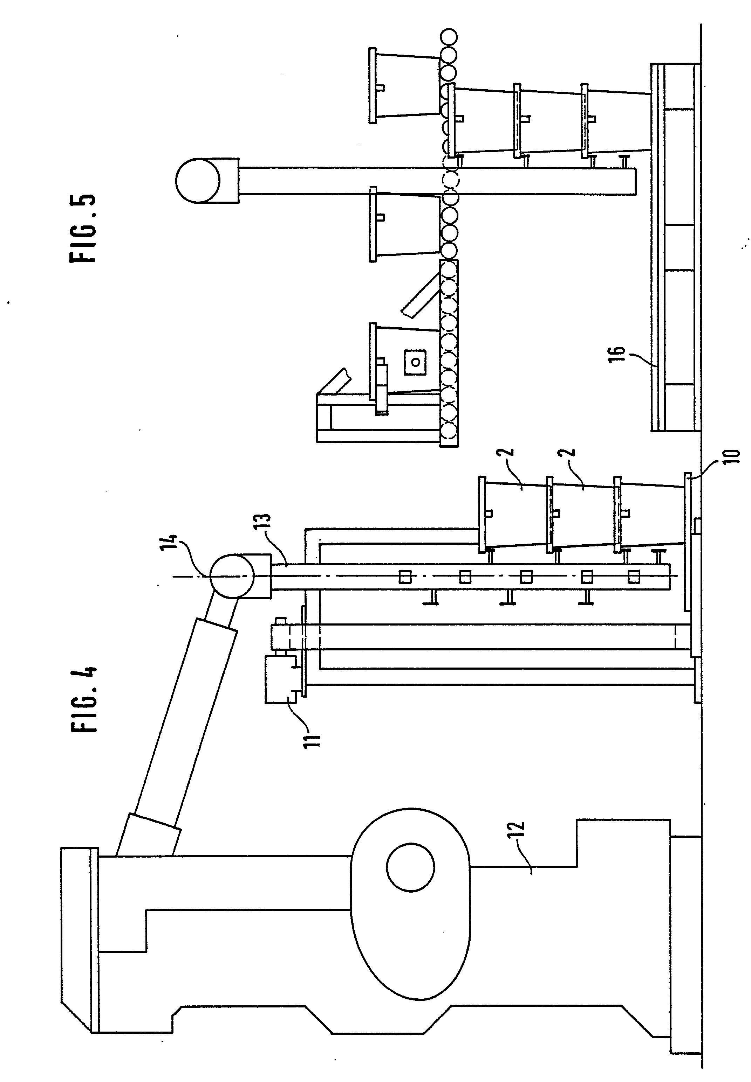

Gemäß Fig. 4 wird nun von der Aufnahme 10 der Stapel mit den Behältern 2 von einem Industrie-Roboter 12 erfaßt und gemäß Fig. 5 auf einer Palette 16 abgesetzt. Das Absetzen erfolgt dabei nach einem vorgegebenen Palettierschema, das in den Roboter eingegeben wird und auf die Größe der Behälter abgestimmt ist.

Bei dem Industrie-Roboter 12 handelt es sich um einen Knickarm-Roboter, dessen Greifarm 13 um seine Längsachse 14 drehbar ist. Auf seinem Außenumfang, der bei dem dargestellten Ausführungsbeispiel in vier zueinander rechtwinklig liegende Flächen unterteilt ist, sind Gruppen von jeweils übereinander angeordneten Aufnahmehaken 15 angebracht, wobei auf jeder der vier Flächen eine Gruppe vorgesehen ist. Die Haken jeder Gruppe haben einen gleichen Abstand voneinander, der auf die Größe der jeweils zu palettierenden Behälter 2 abgestimmt ist, wobei jedem Behälter des Stapels ein Aufnahmehaken 15 zugeordnet ist. Die Aufnahmehaken der einzelnen Gruppen sind so ausgebildet und haben einen solchen Abstand voneinander, daß sie unter die zur Aufnahme des Behälterdeckels dienende Wulst aller Behälter eines Stapels greifen können und damit gleichzeitig alle Behälter des Stapels aufnehmen können.

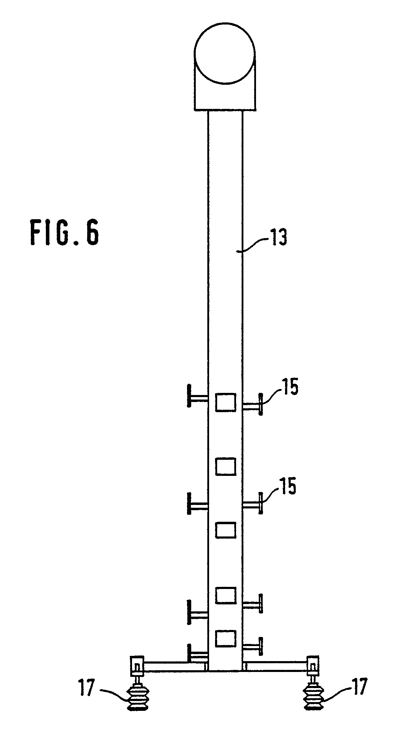

Gemäß Fig. 6 können am unteren Ende des Greifarms 13 zwei oder mehr Saugnäpfe angebracht werden, mit denen beispielsweise vor dem Palettieren noch eine Pappunterlage aufgenommen und auf der Palette plaziert werden kann.

Das zuvor beschriebene Ausführungsbeispiel setzt voraus, daß eine Zentrierung vor der Stapelbildung vorgesehen werden muß. Eine solche Zentrierung ist jedoch nicht immer notwendig. In der Regel ist der letzte Vorgang bei der Fertigung solcher Behälter das Aufsetzen des Deckels nach abgeschlossener Füllung, was bei automatischem Betrieb voraussetzt, daß auch hier die Behälter eine solche Lage einnehmen, daß die Deckel auch aufgesetzt werden können. Es hat sich gezeigt, daß die Behälter, nachdem sie mit Deckeln versehen worden sind, ihre zentrierte Lage auf der Zuführungsbahn zur Palettiervorrichtung kaum noch verändern, so daß eine Zentriervorrichtung entbehrlich ist.

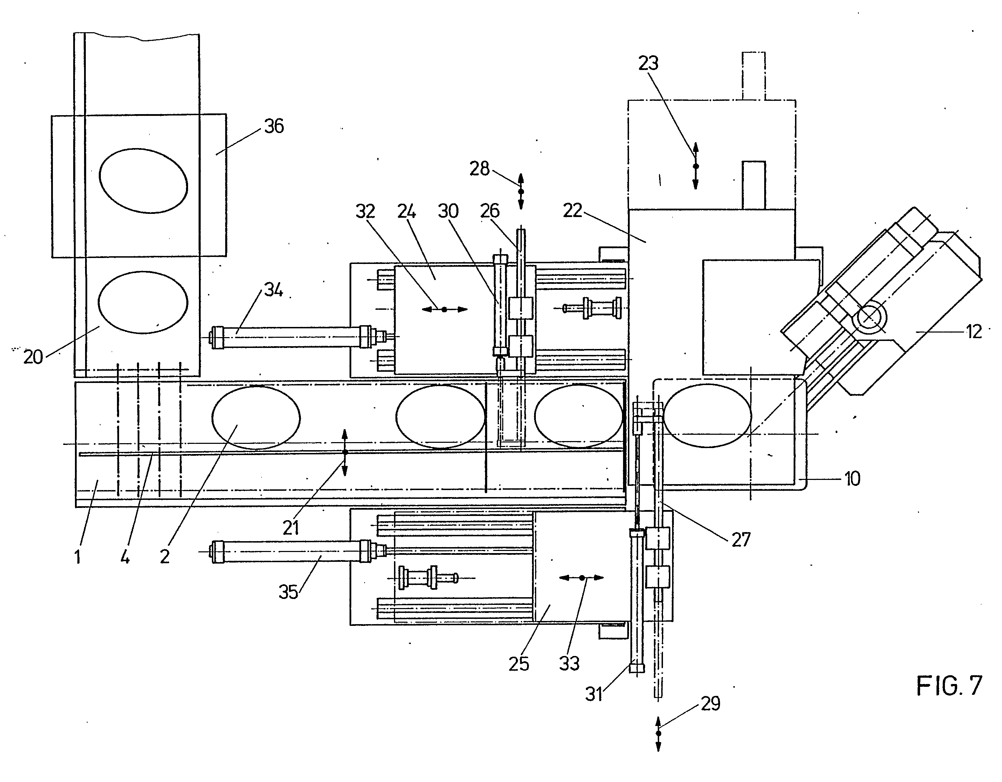

Bei dem Ausführungsbeispiel gemäß Fig. 7 ist sowohl die Positionierungsvorrichtung 4 als auch die Abführ- und Stapelvorrichtung so ausgebildet, daß eine Palettierung von Behältern beliebiger Form und Größe möglich ist.

Die Positionierungsvorrichtung 4 besteht aus einer einfachen Schiene, die quer zur Längsausdehnung der Zuführungsbahn 1 in Richtung des Pfeiles 21 verschiebbar ist und auf die jeweils zu palettierende Behältergröße einstellbar ist. Die Behälter 2 werden rechtwinklig von einem Zuführband 20 auf die Zuführungsbahn 1 geleitet, wobei eine nur im Bedarfsfall, aber sonst meist nicht erforderliche Zentriervorrichtung 36 vorgeschaltet werden kann.

Hinter der Zuführungsbahn befindet sich oberhalb der Aufnahmevorrichtung 10 für den Stapel eine Platte 22, die in Richtung des Pfeils 23 quer zur Zuführungsbahn verschiebbar ist. Die Platte 22 befindet sich in gleicher Höhe wie die Zuführungsbahn 1 und kann in die voll ausgezeichnete Lage geschoben werden, in der sie praktisch eine Verlängerung der Zuführungsbahn 1 bildet.

Beiderseits der Zuführungsbahn 1 sind zwei Schlitten 24 und 25 vorgesehen, an denen Schieber 26 und 27 angebracht sind, die quer in Richtung der Pfeile 28 bzw. 29 in den Transportweg der Behälter einfahrbar sind, und zwar so, daß sich zwischen ihnen jeweils ein Behälter befindet. Die Verstellung der Schieber 26 und 27 erfolgt durch Pneumatikzylinder 30 und 31. Die Schlitten 24 und 25 sind in Richtung der Pfeile 32 bzw. 33 durch Pneumatikzylinder 34 bzw. 35 verschiebbar.

Die Steuerung erfolgt bei diesem Ausführungsbeispiel so, daß die Platte 22 in die dargestellte voll ausgezeichnete Lage verschoben wird, worauf die Schieber 26 und 27 einwärts fahren und einen zwischen ihnen befindlichen Behälter 2 auf die Platte 22 schieben. Anschließend wird die Platte 22 in die gestrichelt dargestellte Lage gefahren, so daß sie unter dem auf ihr befindlichen Behälter weggezogen wird und dieser auf der Aufnahmevorrichtung 10 bzw. auf dort bereits abgesetzte Behälter abgestellt wird. Die Schieber 26 und 27 fahren dann wieder nach außen, und der Zyklus wiederholt sich mit dem nächsten Behälter.

Die erfindungsgemäße Palettiervorrichtung ist raumsparend und rasch umstellbar, wenn im Fertigungsablauf eine andere Behältergröße oder Behälterform zur Palettierung ansteht. Die Umstellung kann beispielsweise durch einen Wahlschalter eingeleitet werden, der auf die jeweils zu handhabende Behältergröße einstellbar ist, und durch den automatisch die Einstellung und Aktivierung der Positionierungsvorrichtung, der Abführvorrichtung, der Hub und die Hubzahl der absenkbaren Aufnahmevorrichtung, die Einstellung der Aufnahmehaken-Gruppe des Roboters und ggfs. das Palettierschema vorwählbar ist.

Die Erfindung ist nicht auf die Palettierung von Farbgebinden beschränkt, sondern die Vorrichtung ist auch zum Palettieren von Behältern mit anderem Inhalt einsetzbar, sofern die Behälter stapelfähig sind.

## Ansprüche

1. Vorrichtung zum Palettieren von stapelfähigen, tragbaren Behältern, insbesondere von Farbgebinden, unter Verwendung eines Industrie-Roboters, dadurch gekennzeichnet, daß in der Zuführungsbahn (1) eine auf Behälter (2) unterschiedlicher Größe einstellbare Positionierungsvorrichtung (4) für die einzeln zugeführten Behälter (2) einer jeweils gleichen Größe vorgesehen ist, daß am Ende der Zuführungsbahn (1) eine Abführ- und Stapelvorrichtung (9; 22, 26, 27; 10) zur Bildung eines Stapels aus einer vorgegebenen Zahl von Behältern (2) vorgesehen ist, und daß der Industrie-Roboter (12) zum Aufnehmen der Stapel und zu ihrem Umsetzen auf eine Palette (16) einen Greiferarm (13) aufweist, der für die Handhabung von unterschiedlichen Behältergrößen der Stapel einstellbar ist.

2. Vorrichtung nach Anspruch 1, dadurch gekennzeichnet, daß die Stapelvorrichtung aus einer in Stufen entsprechend einer wählbaren Behälterhöhe absenkbaren Aufnahmevorrichtung (10) besteht.

3. Vorrichtung nach Anspruch 1 oder 2, dadurch gekennzeichnet, daß als Industrie-Roboter (12) ein Knickarm-Roboter dient, dessen Greiferarm (13) um seine Längsachse (14) drehbar ausgebildet ist und auf seinem Außenumfang mehrere Gruppen von jeweils übereinander angeordneten Aufnahmehaken (15) aufweist, daß die Aufnahmehaken (15) in jeder Gruppe den gleichen Abstand voneinander, aber einen von Gruppe zu Gruppe verschiedenen Abstand aufweisen und wahlweise eine Gruppe in die Arbeitslage einstellbar ist.

4. Vorrichtung nach Anspruch 3, dadurch gekennzeichnet, daß die Aufnahmehaken (15) so ausgebildet sind und einen solchen Abstand voneinander in den Gruppen haben, daß sie unter die zur Aufnahme eines Behälterdeckels dienende Wulst oder Henkelösen aller Behälter eines Stapels greifen können.

5. Vorrichtung nach einem der vorhergehenden Ansprüche, dadurch gekennzeichnet, daß der Zuführungsbahn (1) eine Zentriervorrichtung (36) vorgeschaltet ist.

6. Vorrichtung nach einem der vorhergehenden Ansprüche, dadurch gekennzeichnet, daß die Abführvorrichtung aus einer hinter der Zuführungsbahn (1) oberhalb der Aufnahmevorrichtung (10) für die Behälterstapel in der Ebene der Zuführungsbahn in eine eine Verlängerung der Zuführungsbahn bildende Position und aus dieser Position heraus verschiebbaren Platte (22) und aus in Transportrichtung der Behälter (2) hin- und herbewegbaren, quer in den Transportweg der Behälter einfahrbaren Schiebern (26, 27) besteht, und daß die Steuerung für die Platte (22) und die Schieber (26, 27) so ausgebildet ist, daß jeweils ein einzelner Behälter (2) durch die Schieber (26, 27) auf die zur Zuführungsbahn (1) eingefahrene Platte (22) und durch anschließendes Herausfahren der Platte (22) auf die Aufnahmevorrichtung (10) bzw. auf dort bereits abgesetzte Behälter (2) gelangt.

7. Vorrichtung nach einem der Ansprüche 1 bis 4, dadurch gekennzeichnet, daß die Positionierungsvorrichtung (4) als Zentriervorrichtung ausgebildet ist und aus beidseitig der Zuführungsbahn (1) angeordneten Anschlaggruppen (5a, 5b) besteht, daß die Anschlaggruppen entsprechend der Breite der zu palettierenden Behälter (2) relativ aufeinander zu bewegbar sind, daß wahlweise jeweils ein Paar einander gegenüberliegender Anschläge derart aktivierbar ist, daß sie im Weg der Griffhalterungen (8) des jeweils ankommenden Behälters (2) liegen, und daß die Abführvorrichtung aus einem Greiferpaar (9) besteht, mit dem der auf die Anschläge (5a, 5b) aufgelaufene Behälter (2) erfaßbar und auf die Aufnahmevorrichtung (10) für die Stapelung bzw. auf darauf bereits abgesetzte Behälter aufsetzbar ist.

8. Vorrichtung nach einem der vorhergehenden Ansprüche, dadurch gekennzeichnet, daß ein Wahlschalter vorgesehen ist, der auf die jeweils zu palettierende Behältergröße einstellbar ist, und durch den automatisch die Einstellung und Aktivierung der Positionierungsvorrichtung, der Abführvorrichtung, der Hub und die Hubzahl der absenkbaren Aufnahmevorrichtung (10) und die Einstellung der Aufnahmehaken-Gruppe (15) des Roboters (12) vorwählbar ist.

FIG.1

FIG.2

EP 0 391 837 A2

FIG. 3

FIG.5

FIG.4

974/3

FIG.6

FIG. 7

EP 0 391 837 A2